# EUROPEAN PATENT SPECIFICATION

(11) **EP 3 392 124 B1**
(45) Date of publication and mention of the grant of the patent: **12.02.2020**
(21) Application number: 18168167.7
(22) Date of filing: 19.04.2018
(51) Int. Cl.: B62D 57/024, B63B 59/10, A47L 1/02, E04G 23/00

(54) **MULTIFUNCTIONAL ROBOT SYSTEM AND METHOD**
MULTIFUNKTIONALES ROBOTERSYSTEM UND VERFAHREN
SYSTÈME ET PROCÉDÉ DE ROBOT MULTIFONCTIONNEL

(30) Priority: 19.04.2017 CN 201710258949; 09.04.2018 JP 2018074629
(43) Date of publication of application: 24.10.2018
(73) Proprietor: Zhejiang University, Hangzhou, Zhejiang 310027 (CN)
(72) Inventor: LI, Xin, Hangzhou, Zhejiang 310027 (CN)
(74) Representative: Sun, Yiming

(56) References cited:
- DE-A1-102007 060 568
- GB-A- 2 268 457
- JP-A- H0 793 028
- JP-A- S60 259 388
- JP-A- 2005 046 926
- JP-A- 2006 198 762
- US-A- 5 575 346

## Description

### TECHNICAL FIELD

The present invention relates to the technical field of robot applications, and in particular, to a multifunctional robot system having operation capability and an application thereof.

In particular the present invention relates to a multifunctional robot system, comprising: a movable supply station comprising a power supply system; a plurality of robot units; and a traction device for driving the movable supply station, wherein the movable supply station is connected with each of the plurality of robot units through a connecting cable, the connecting cable comprises a plurality of branch power cables, and the power supply system is configured to provide power for each robot unit respectively through the plurality of branch power cables; wherein each of the plurality of robot units is provided with a robot driving device, an operation execution device, a robot adsorption device and a robot moving device; and wherein the robot driving device is configured to enable the each of the plurality of robot units to move on a working surface, the robot adsorption device is configured to adhere the each of the plurality of robot units to the working surface, the plurality of robot units are configured to move on a horizontal or vertical plane or over a bevel, and the movable supply station is configured to follow the plurality of robot units.

### BACKGROUND

Document JP S60 259388 A discloses a multifunctional robot system of the generic type as defined in the preceding paragraph.

In particular JP S60 259388 A discloses a multifunctional robot system including working robots to be attached to the vertical wall of a vessel to be inspected, and are brought into close contact with the vertical wall by a magnetic force. A control/power unit is disposed in a gondola suspended by a wire attached to the top of the vessel. The robot and the power unit exchange various signals. Connection is provided by cable hoses which also perform suction of dust. In this multifunctional robot system the robots operate a manipulator in a state of being in close contact with the wall surface by magnets to perform various operations.

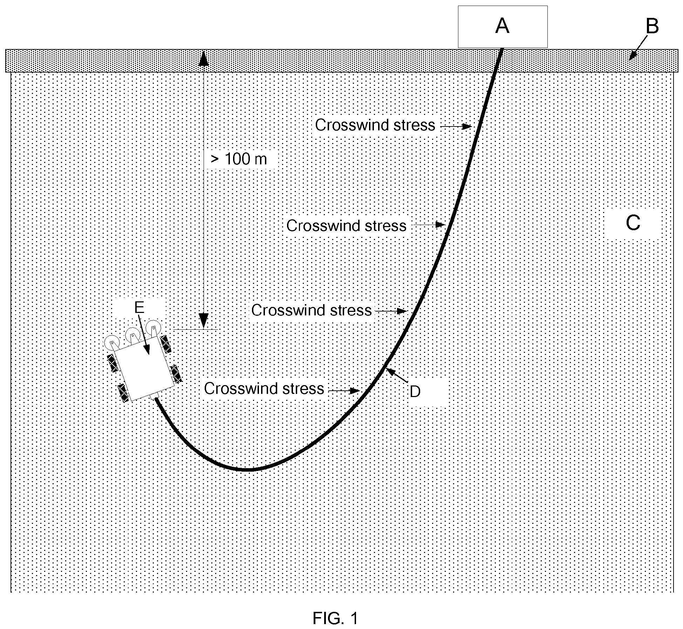

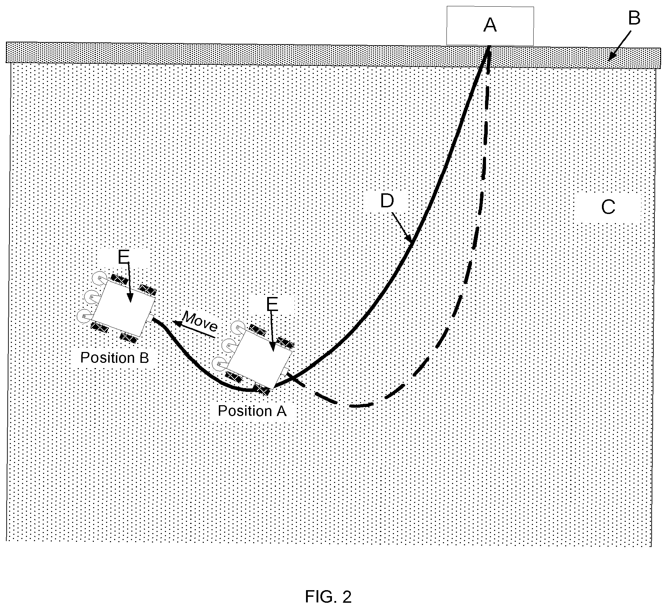

With continuous development of the modern scientific and technological level, robots are applied extensively. A Chinese invention patent with the publication number of CN 104 802 872 A discloses a wall-climbing robot. The wall-climbing robot E can be adsorbed to the surface of a rough outer wall C to move. Generally, the wall-climbing robot E often obtains continuous power from the outside through a pipe or a wire D. For example, as shown in FIG. 1, when the wall-climbing robot E performs cleaning or spraying operation on the vertical plane, if the distance between the wall-climbing robot E and a roof B is 100 m, the wall-climbing robot E is encountered with the following problems:
(1) If the wall-climbing robot E is provided with a water tank or a coating box and a control component (such as a control valve), the wall-climbing robot E becomes very heavy, and the huge gravity action will cause the wall-climbing robot E to fall.
(2) If a raw material supply device A such as the water tank or the coating box is placed on the roof, raw materials such as water or paint need to be conveyed to the wall-climbing robot E through a very long pipe D, which leads to difficulty in controlling the raw material supply amount. If the raw material control component (a flow valve, a pressure valve, etc.) is placed on the roof, the length (such as 100 m) of the pipe and a cable will lead to severe time lag, and the time lag will lead to the problems of control failure and instability. Moreover, when the raw materials flow through the very long pipe to be conveyed to the wall-climbing robot E, the raw materials are subjected to a great loss along the long pipe, so that pressure and flow at the robot unit end are insufficient. If the raw material control component is installed on the wall-climbing robot E, the weight of the wall-climbing robot E is greatly increased, which is extremely adverse to the wall-climbing robot E.
(3) If the raw material supply device A is placed on the roof, power flow (a current, etc.) needs to be conveyed to the robot unit through a very long cable, which leads to difficulty in power control. If a power control component (a transformer, etc.) is placed on the roof, the length (such as 100 m) of the cable will lead to severe time lag, and the time lag will lead to the problems of control failure and instability. Moreover, when the power flow is conveyed to the robot unit through the very long pipe, the power flow is subjected to a great loss along the long cable, so that power of robot unit end is insufficient. If the power control component is installed on the wall-climbing robot E, the weight of the wall-climbing robot E is greatly increased, which is extremely adverse to the wall-climbing robot E.
(4) With FIG. 2 as an example, when the wall-climbing robot E horizontally moves from a position A to a position B, a cable D is also subjected to corresponding position changes. The weight of the cable D applies a horizontal drag force on the robot unit. That is, the wall-climbing robot E has to drive the cable D to move at the same time when moving. If the cable D is very long, the cable D is very large in mass. For the moving wall-climbing robot E, the cable D becomes a very high inertia load and severely affects movement performance of the wall-climbing robot E. Moreover, in order to resist the immeasurable horizontal drag force, an adsorption device of the wall-climbing robot E has to always operate in a maximum adsorption force state, which leads to too high energy consumption of the adsorption device.
(5) The long cable D which connects the wall-climbing robot E with a roof supply device A is suspended aloft. Fierce crosswind exists aloft, and the crosswind applies an acting force on the cable, which leads to swing of the cable; moreover, the acting force directly acts on the wall-climbing robot E through the cable D to form a horizontal drag force on the wall-climbing robot E, and the horizontal drag force is hereinafter referred to as a crosswind drag force. Moreover, the crosswind drag force varies with the state of the high-altitude crosswind and is an acting force which is instable and difficult to predict. If the cable D is very long (100 m or longer), the acting force becomes very large and severely affects stability of the wall-climbing robot E.
(6) In the operation implementation process, we need to reel or unreel the cable D according to the movement of the wall-climbing robot E. Under ideal conditions, the reeling or unreeling length and speed of the cable D can be calculated according to the relative positions of the wall-climbing robot E and a supply unit A on the roof B. However, the connecting cable D between the wall-climbing robot E and the supply unit A on the roof has a problem of a flexible line body with the two ends fixed, the cable D is further subjected to influences of factors such as gravity and the crosswind acting force, and when the cable D is longer, the influences are more remarkable. Therefore, the problem of the flexible line body becomes very complex and difficult to solve, so that it is difficult to accurately control the reeling or unreeling length and speed of the cable D according to the movement of the robot. If the cable D is reeled or unreeled inappropriately, it certainly has a very serious influence on the movement of the wall-climbing robot E.

It thus can be seen that the aforementioned technical problem needs to be solved for the improvement of the wall-climbing robot.

### SUMMARY

The present invention provides a multifunctional robot system having operation capability. The multiple technical problems mentioned in the background art can be solved through the multifunctional robot system defined in independent claim 1 or alernatively in independent claim 5.

In accordance with the invention there is provided, in a first aspect, a multifunctional robot system, comprising: a movable supply station comprising a power supply system; a plurality of robot units; and a traction device for driving the movable supply station, wherein the movable supply station is connected with each of the plurality of robot units through a connecting cable, the connecting cable comprises a plurality of branch power cables, and the power supply system is configured to provide power for each robot unit respectively through the plurality of branch power cables; wherein each of the plurality of robot units is provided with a robot driving device, an operation execution device, a robot adsorption device and a robot moving device; and wherein the robot driving device is configured to enable the each of the plurality of robot units to move on a working surface, the robot adsorption device is configured to adhere the each of the plurality of robot units to the working surface, the plurality of robot units are configured to move on a horizontal or vertical plane or over a bevel, and the movable supply station is configured to follow the plurality of robot units; in addition the multifunctional robot system comprises a plurality of coupling devices configured to flexibly connect the plurality of robot units to the movable supply station.

According to a preferred embodiment of the first aspect, the supply station is further provided with a supply station moving device and a supply station adsorption device. The supply station adsorption device adsorbs the supply station to the working surface, and the supply station moving device comes into contact with the working surface, so that the supply station moves on the working surface.

In accordance with the invention there is provided, in a second aspect, a multifunctional robot system, comprising: a movable supply station comprising a power supply system; a plurality of robot units; and a traction device for driving the movable supply station, wherein the movable supply station is connected with each of the plurality of robot units through a connecting cable, the connecting cable comprises a plurality of branch power cables, and the power supply system is configured to provide power for each robot unit respectively through the plurality of branch power cables; wherein each of the plurality of robot units is provided with a robot driving device, an operation execution device, a robot adsorption device and a robot moving device; and wherein the robot driving device is configured to enable the each of the plurality of robot units to move on a working surface, the robot adsorption device is configured to adhere the each of the plurality of robot units to the working surface, the plurality of robot units are configured to move on a horizontal or vertical plane or over a bevel, and the movable supply station is configured to follow the plurality of robot units; in addition the movable supply station further comprises a movable supply station moving device and a movable supply station adsorption device, wherein the movable supply station adsorption device is configured to adhere the movable supply station to the working surface, and the movable supply station moving device is configured to remain contact with the working surface so that the movable supply station moves on the working surface; and at least one approach bridge plate that is configured to be accommodated or unfolded.

According to a preferred embodiment of the second aspect, the supply station is further provided with a recycling cabin, the recycling cabin at least accommodates one robot unit, and the robot unit can move into the recycling cabin from the working surface to be recycled and move out of the working surface from the recycling cabin.

According to some embodiments, the approach bridge plate is provided with a recycling cabin, the recycling cabin at least accommodates one robot unit, at least one side edge of the approach bridge plate is placed on the working surface and comes into contact with the working surface, and the robot units can move into the recycling cabin of the approach bridge plate from the working surface to be recycled and move out of the working surface from the recycling cabin of the approach bridge plate.

According to some embodiments, the supply station is further provided with a recycling cabin, the recycling cabin at least accommodates one robot unit, and the robot units can move into the recycling cabin of the supply station through the approach bridge plate from the working surface to be recycled and move out of the working surface from the recycling cabin of the supply station.

According to some embodiments, the side of the recycling cabin is provided with a limiting device, and the limiting device is used for limiting the positions of the robot units.

According to some embodiments, the present invention is implemented as follows: an application of the foregoing multifunctional robot system is provided; the plurality of robot units are applied as wall cleaning robots, the operation execution devices are applied as wall cleaning devices, and the walking working surface for the plurality of robot units is a vertical or slanted building wall; the traction device comprises a winch arranged at the top of a building, the winch pulls the supply station through a suspension rope to follow the plurality of robot units to move up and down, the plurality of robot units clean the building wall, and the plurality of robot units adhere to the wall through the adsorption devices thereof to walk; the supply station is provided with a water source, the connecting cable comprises branch power cables and branch water pipes, and the supply station supplies clean water to each robot unit through the branch water pipes.

According to some embodiments, the plurality of robot units each are further provided with a camera shooting device and a robot wireless ranging signal station; images shot by the camera shooting device are transmitted to a remote control system through a wireless transmitting device; the building is provided with wireless positioning devices in communication with the robot wireless ranging signal station, and the wireless positioning devices are also controlled by the remote control system.

Compared with the prior art, according to the multifunctional robot system according to the present invention and the application thereof, the independent supply station is arranged, the execution device of the robot is separated from the driving device thereof and a supply device; the supply station continuously provides raw materials and energy for the robot, the weight and size of the robot side are reduced, single-time working time of the robot is prolonged, working efficiency and stability and controllability of the robot units are improved, and energy consumption can further be reduced.

### BRIEF DESCRIPTION OF DRAWINGS

FIG. 1 is an operating schematic diagram of an existing wall-climbing robot;
FIG. 2 is a state schematic diagram prior to and after position change of the existing wall-climbing robot on the wall in FIG. 1;
FIG. 3 is a schematic diagram of example 1, example 2 and example 7 of a multifunctional robot system; these examples are intended to provide a better understanding of how the invention is made, but as such do not present multifunctional robot systems according to the invention;
FIG. 4 is a side view of a cleaning robot in FIG. 3;
FIG. 5 is a schematic diagram of a usage state of Embodiment 3 of the multifunctional robot system according to a first aspect of the present invention;
FIG. 6 is a schematic diagram of a usage state of Embodiment 4 of the multifunctional robot system according to the present invention;
FIG. 7 is a cross-sectional schematic diagram of a supply station usage state of Embodiment 5 of the multifunctional robot system according to the present invention;
FIG. 8 is a schematic diagram illustrating that the supply station crosses a protrusion obstacle through an approach bridge plate in FIG. 7;
FIG. 9 is a schematic diagram illustrating that a driving wheel of the supply station crosses the protrusion obstacle in FIG. 7;
FIG. 10 is a cross-sectional schematic diagram of a recycling cabin in FIG. 7;
FIG. 11 is a schematic diagram of Embodiment 6 of the multifunctional robot system, according to some embodiments; and
FIG. 12 is a schematic diagram of Embodiment 8 of the multifunctional robot system, according to a second aspect of the invention.

### DESCRIPTION OF EMBODIMENTS

To make the technical problems to be solved, the technical solution and beneficial effects of the present invention clearer and more comprehensible, the following further describes the present invention in detail with reference to the accompanying drawings, embodiments and examples. It should be understood that the specific embodiments described herein are merely used to explain the present invention but are not intended to limit the present invention.

### Example 1:

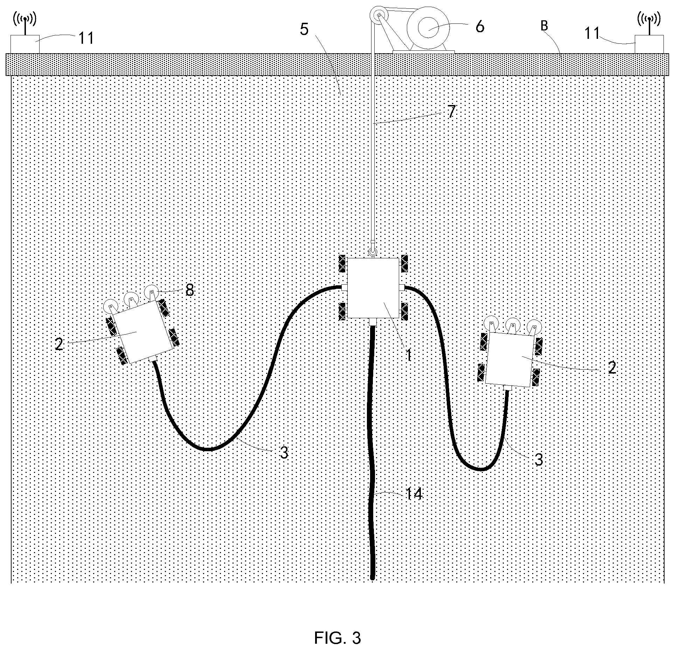

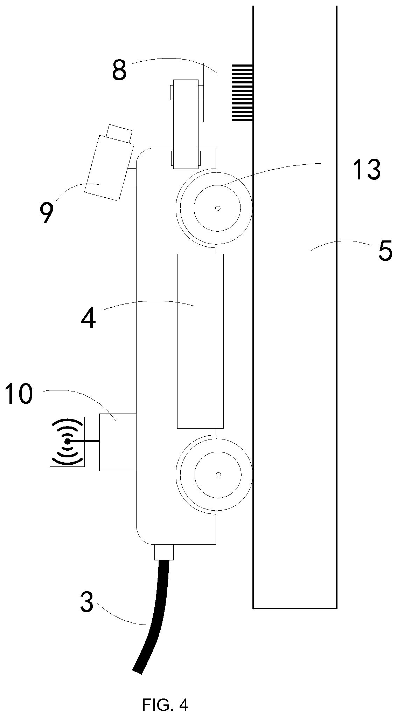

Referring to FIGs. 3 and 4, an example of a multifunctional robot system comprises a movable supply station 1 and a plurality of robot units 2 as well as a traction device for driving the supply station 1 to move; and the traction device drives the supply station 1 to move. The traction device pulls the supply station 1 through a rope 7. The supply station 1 has no active movement capability and can only be pulled by the traction device to move.

The supply station 1 is provided with a power supply system. The robot units 2 each are provided with a robot driving device, an operation execution device, a robot adsorption device 4 and a robot moving device 13. The supply station 1 is connected with each robot unit 2 respectively through connecting cables 3. The robot driving device makes the robot units 2 to move on a working surface by driving the robot moving device. The power supply system provides power flow for each robot unit 2 respectively through the connecting cables 3. The power flow comprises a power source, a high-pressure air source, a hydraulic source, a high-pressure water source, etc. The robot adsorption device 4 makes the robot units 2 adsorbed to the surface to move.

The plurality of robot units 2 can move and operate on the vertical and slanted surfaces, and can also move and operate on a ceiling, and the supply station 1 follows the plurality of robot units to move. The plurality of robot units 2 walk in a range with the supply station 1 as the center. For example, the operation execution devices of the plurality of robot units 2 may be cameras to implement camera shooting operation. Again for example, the operation execution devices of the plurality of robot units 2 may be sonic analyzers to implement flaw detection operation of the working surface.

The supply station 1 is provided with the power supply system. The power supply system obtains continuous power flow from below or above through a conveying cable 14. In the example of FIG. 3, the power supply system obtains continuous power flow from below through the conveying cable 14. The power supply system may also be provided with a power source, such as a storage battery, and the power flow is conveyed from the power source to the robot units 2 through a connecting cable 3.

With the sonic analyzers as an example, the operation execution devices are ultrasonic probes. Ultrasonic signal amplification and storage processing components are usually heavy, and we can place these heavy components on the supply station 1. In this way, the weight of the robot units 2 can be reduced, and thus the problem (1) in the background art is solved.

With wall cleaning as an example, the operation execution devices are hairbrush devices, and a device for providing cleaning water for wall cleaning is referred to as a raw material supply device (in this example, the raw material specially refers to cleaning water). The raw material supply device usually comprises a booster pump and a control valve and the like, and thus the raw material supply device has a very large weight. The operation execution devices can be installed on the robot units 2, and the raw material supply device is installed on the supply station 1. The conveying cable 14 comprises raw material branch pipes, and clean water is conveyed to the raw material supply device on the supply station 1. The connecting cables 3 include raw material branch pipes, and the cleaning water passes through the branch pipes to be conveyed to the operation execution devices of the robot units 2. The connecting cables 3 each are usually only more than ten meters long. Raw material flow does not lead to obvious time tag and loss along the cable when being conveyed in the connecting cable which is more than ten meters long, and thus it can be guaranteed that the raw material flow is sufficiently supplied and effectively controlled. The problem (2) in the background art is solved.

In this example, the power supply system of the supply station 1 provides power flow for the robot units 2 through the connecting cables 3. The connecting cables 3 each are usually only more than ten meters long. The power flow does not lead to obvious time tag and loss along the cable when being conveyed in the connecting cables which each are more than ten meters long, and thus it can be guaranteed that the power flow is sufficiently supplied and effectively controlled. The problem (3) in the background art is solved.

In this example, when the robot units 2 move, only the connecting cables 3 which each are more than ten meters long needs to be driven. For the robot units 2, this is a small inertia load, the mobility performance of the robot units 2 is not affected, and the problem (4) in the background art is solved.

### Example 2:

Referring to FIGs. 3 and 4, in a varied embodiment of example 1, the supply station 1 is further provided with a supply station adsorption device and a supply station moving device (not illustrated in FIG. 3). For working aloft, a rope 7 for suspending the supply station 1 can be as long as dozens of meters or even hundreds of meters. Fierce crosswind exists aloft, the crosswind applies an acting force on the rope 7 to make the rope 7 swing, so that the supply station 1 swings. The swinging supply station 1 pulls the robot units 2 through the connecting cables 3, so that the stability of the robot units 2 is affected severely. The supply station moving device comprises a plurality of wheels. The supply station adsorption device makes the supply station 1 adhere to the working surface, so that the wheels of the supply station moving device and the working surface come into contact and produce friction force. The friction force can overcome a crosswind drag force of the rope 7. As a result, the crosswind drag force is not transmitted to the connecting cable 3 and is not transmitted to the robot units 2, so that the influence of the immeasurable crosswind drag force is eliminated, and the stability of the robot units 2 is ensured. The influence of the immeasurable crosswind drag force is eliminated, and the adsorption devices 4 of the robot units 2 do not need to always operate in a maximum adsorption force state. Therefore, the energy consumption of the adsorption devices 4 becomes small. The problem (5) in the background art is solved well.

In this example, the supply station adsorption device makes the supply station 1 adhere to the working surface, and randomly varying external forces such as the crosswind drag force are overcome by the friction force between the supply station 1 and the working surface. Therefore, the problem of the flexible line body which has two fixed ends and is composed of the robot units 2, the supply station 1 and the connecting cables 3 becomes simple, and the robot units 2 can move freely in the length range of the connecting cables 3. The problem (6) in the background art is solved well.

### Embodiment 3:

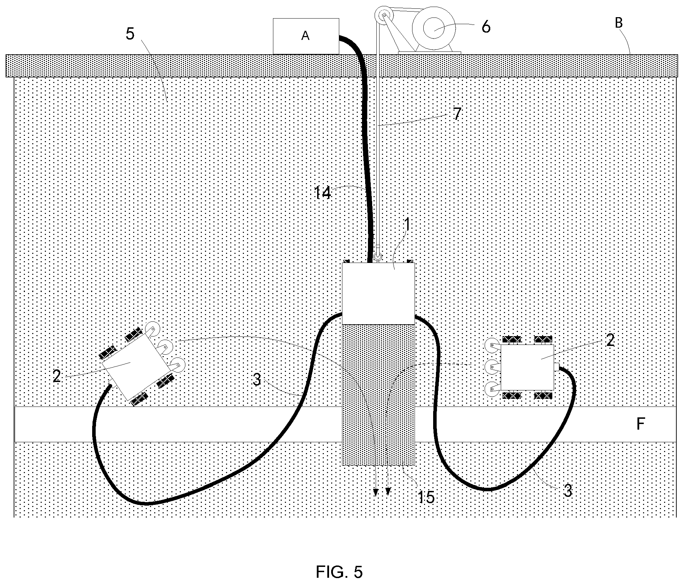

FIG. 5 shows an embodiment of the first aspect of the invention based on the system of example 2. The supply station 1 is further provided with a supply station moving device and a supply station adsorption device (not illustrated in the figure). The supply station moving device comprises a plurality of wheels. The supply station 1 is further provided with an approach bridge plate 15, and at least part of the approach bridge plate 15 is arranged on the supply station 1 in a mode of being accommodated or unfolded; when the approach bridge plate 15 is in an unfolded state, at least one side edge of the approach bridge plate 15 is placed on the working surface, and the robot units 2 move to the approach bridge plate 15 from the side edge and move out of the approach bridge plate 15 from another side edge. The supply station 1 in FIG. 5 is provided with an approach bridge plate 15. One side edge of the approach bridge plate 15 is installed on the supply station 1 and rotates with the side edge as the axis, and thus the approach bridge plate 15 can be accommodated or unfolded. When the approach bridge plate 15 is in the unfolded state, a plurality of side edges of the approach bridge plate 15 come into contact with a wall 5. The robot units 2 move to the approach bridge plate 15 from one side edge of the approach bridge plate 15 and move out of the approach bridge plate 15 from the other side edge, as shown in a mobile path illustrated by dotted lines in FIG. 5. After the robot units 2 cross a trench F, the approach bridge plate 15 rotates through a certain angle to be in an accommodated state, the side edge of the approach bridge plate 15 departs from the wall 5, and the friction between the side edge of the approach bridge plate 15 and the wall 5 is avoided during movement of the supply station 1.

This embodiment is applied to occasions where the working surface is provided with a deep and wide trench F or an offset, e.g., recessed modification trenches in many tall buildings. Because when the working surface has the trench or the offset and the working surface is discontinuous, the robot units 2 in example 1 and example 2 cannot cross the trench F or the offset, so that operation cannot be performed. In this embodiment, through the bridging effect of the approach bridge plate 15, the robot units 2 can move to the working surface on the other side of the trench F or the offset, and continuous operation of the robot units 2 is performed.

### Embodiment 4:

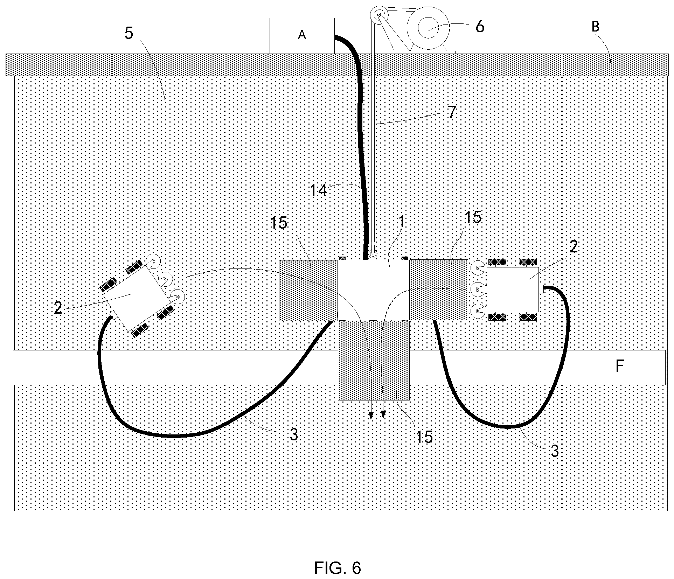

Referring to FIG. 6, in a varied embodiment of Embodiment 3, the supply station 1 in FIG. 6 is provided with three approach bridge plates 15 in total. One side edge of each approach bridge plate 15 is installed on the supply station 1 and rotates with the side edge as the axis, and thus the approach bridge plates 15 can be accommodated or folded. When the approach bridge plates 15 are in an unfolded state, the other side edge of each approach bridge plate 15 comes into contact with the wall 5. The robot units 2 move to one approach bridge plate 15 and move out of another approach bridge plate 15, as shown in a mobile path illustrated by dotted lines in FIG. 6. After the robot units 2 cross a trench F, the approach bridge plates 15 rotate through a certain angle to be in an accommodated state, the side edges of the approach bridge plates 15 depart from the wall 5, and the friction between the side edges of the approach bridge plates 15 and the wall 5 is avoided during movement of the supply station 1.

In this embodiment, through the bridging effect of the approach bridge plates 15, the robot units 2 move to the working surface on the other side of the trench F or the offset, and continuous operation of the robot units 2 is performed.

### Embodiment 5:

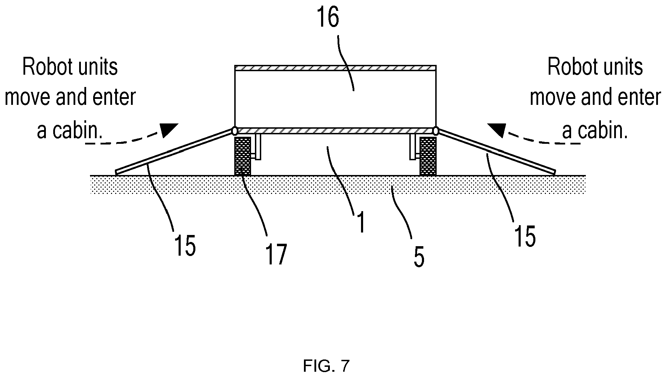

Referring to FIG. 7, it illustrates another varied embodiment of the invention based on the system of example 2. FIG. 7 is a cross-section diagram of the supply station 1. The supply station 1 is further provided with a supply station moving device and a supply station adsorption device. The supply station moving device comprises a plurality of wheels 17. The supply station 1 is further provided with a recycling cabin 16, the recycling cabin 16 at least accommodates one robot unit 2, and the robot unit 2 can move into the recycling cabin 16 from the working surface 5 to be recycled or move out of the working surface 5 from the recycling cabin 16. The approach bridge plate 15 is arranged on the outer side of the recycling cabin 16, and can be accommodated or unfolded. When the approach bridge plate 15 is in an unfolded state, at least one side edge of the approach bridge plate 15 is placed on the working surface 5 and comes into contact with the working surface 5. The robot units 2 move into the recycling cabin 16 through the approach bridge plate 15. If the recycling cabin 16 is arranged to be very close to the working surface, the approach bridge plate 15 may not be needed, and the robot units 2 can directly enter the recycling cabin 16.

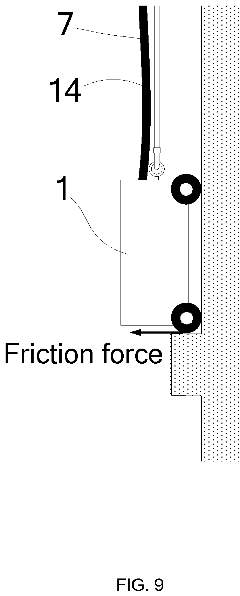

This embodiment not only is suitable for occasions where the working surface is provided with the deep and wide trench F, but also is suitable for occasions where the working surface has a protrusion G. The concrete obstacle crossing working principle in this embodiment is as follows:
When the approach bridge plate 15 of the recycling cabin 16 is in an unfolded state, one side edge of the approach bridge plate 15 comes into contact with the working surface. The robot units 2 move to the recycling cabin 16 of the supply station 1 through the approach bridge plate 15, and then the approach bridge plate 15 is folded to be in an accommodated state. The supply station 1 with the robot units 2 crosses obstacles such as the trench F or the protrusion G by means of the traction device and the supply station moving device. When the height of the obstacle which is the protrusion G is smaller than the radius of each wheel 17 of the supply station moving device, the wheels 17 may be non-driving driven wheels. When the height of the obstacle which is the protrusion G is larger than the radius of each wheel 17 of the supply station moving device, the wheels 17 must be driving wheels. Friction force can be generated between the driving wheels and the protrusion G to help the supply station 1 to cross the obstacle which is the protrusion G, as shown in FIG. 9. After the supply station 1 crosses the obstacle which is the protrusion G, the approach bridge plate 15 is unfolded again, and the robot units 2 move to the working surface to continue to perform operation.

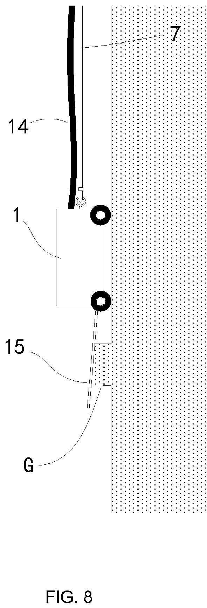

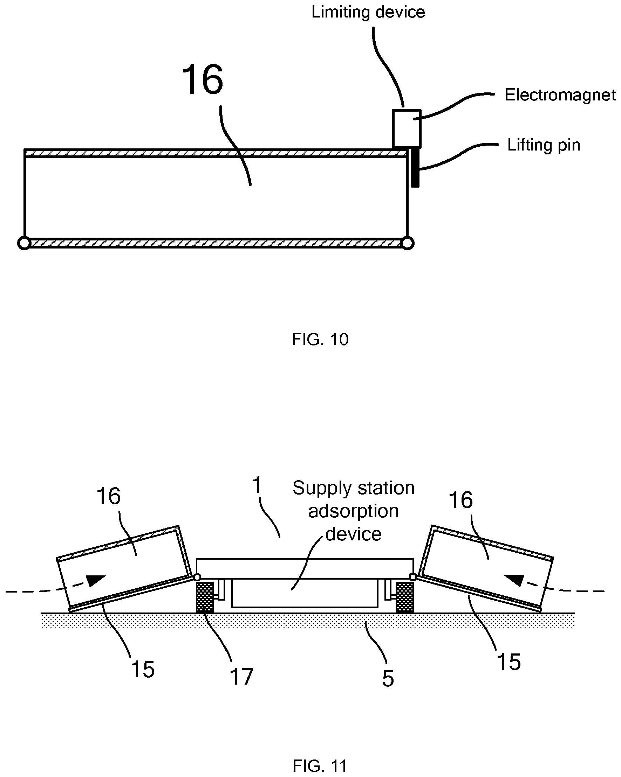

The bridging solutions in Embodiments 3 and 4 can only help the robot units 2 to cross the obstacle which is the recessed trench F, but are invalid for the following two conditions. (1) When the trench F is very wide (e.g., when the trench F is 5 m wide), the approach bridge plate 15 which is at least 5 m long is required for the bridging solutions; apparently, the approach bridge plate 15 which is 5 m long is too large for the supply station 1, and the size and weight of the supply station are greatly increased; (2) when the robot system needs to cross the obstacle which is the very tall protrusion G, as shown in FIG. 8, the approach bridge plate 15 in the bridging solutions is jacked up by the obstacle which is the very tall protrusion G, so that the side edge of the approach bridge plate 15 cannot come into contact with the working surface; and as a result, the robot units 2 cannot move in or out of the approach bridge plate 15. The two above-mentioned problems can be solved well according to the solution in this embodiment. Moreover, the recycling cabin 16 may further be provided with a controllable limiting device (not illustrated in the figure). After the robot units 2 enter the recycling cabin 16, the limiting device is started, so that the robot units 2 are limited in the recycling cabin. Thus, in the process of moving the supply station 1, the robot units 2 cannot fall out of the recycling cabin 16, and the safety of the robot units 2 is ensured. For example, in the limiting device, a lifting pin may be driven by an electromagnet and the lifting pin extends out to perform limiting, as shown in FIG. 10.

### Embodiment 6:

The embodiment as shown in FIG. 11 is a varied embodiment of Embodiment 5. FIG. 11 is a cross-sectional top view of the supply station 1. The recycling cabin 16 is arranged on the approach bridge plate 15. When the robot units 2 are recycled, the approach bridge plate 15 and the recycling cabin 16 are unfolded together, and one end of the approach bridge plate 15 comes into contact with the working surface.

### Example 7:

Referring to FIGs. 3 and 4 together, as a special application of the present invention, the foregoing robot system is applied to the field of building wall cleaning. The plurality of robot units 2 are applied as wall cleaning robots, the operation execution devices are applied as wall cleaning devices, the walking working surface for the plurality of robot units 2 is a vertical or slanted building wall 5; and the traction device comprises a winch 6. In this embodiment, the walking surface for the supply station 1 and the plurality of robot units 2 is the building wall 5. The winch 6 is arranged at the top B of the building, and the winch 6 pulls the supply station 1 through the suspension rope 7 to move up and down along the wall. The plurality of robot units 2 as the wall cleaning robots clean the building wall, and the wall cleaning robot is provided with a cleaning device 8. The plurality of robot units 2 adhere to the wall 5 through the adsorption devices 4 thereof to walk. The supply station 1 is provided with a water source supply (not illustrated in the figure). The water source supply may be a water tank and a pressurized water pump which are arranged on the supply station 1, and the pressurized water pump pressurizes and conveys water in the water tank to the robot units 2. The water source supply can also be implemented by obtaining a continuous pressurized water source from the outside (such as a roof) through a raw material conveying pipe, and the water source is conveyed to the robot units 2 through a raw material transfer pipe on the supply station 1. The connecting cable 3 comprises branch power cables and branch water pipes. The supply station 1 supplies clean water to each robot unit 2 through the branch water pipes.

The plurality of robot units 2 each are further provided with a camera shooting device 9 and a robot wireless ranging signal station 10. Images shot by the camera shooting device 9 are transmitted to a remote control system through a wireless transmitting device, and the images are used for assisting operators in monitoring and control. The building is provided with a plurality of wireless positioning devices 11 in communication with the robot wireless ranging signal station 10, and the wireless positioning devices 11 are used for obtaining the positions of the robot units.

### Embodiment 8:

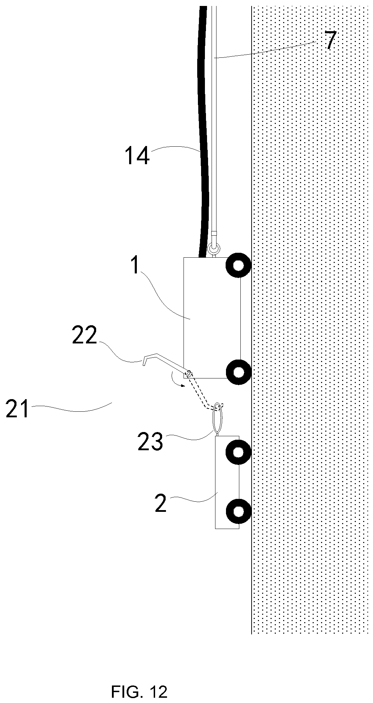

In embodiment 5 and 6, robot unit 2 is accommodated in supply station 1, such that robot unit 2 and supply station 1 become one unit. However, adding approach bridge plates and/or recycling cabins on supply station 1 make supply station 1 complex and heavy. FIG. 12 illustrates another aspect of the invention. Supply station 1 and robot unit 2 can be connected via a coupling device 21 that provides a detachable coupling between the robot units 2 and supply station 1. Coupling devices 21 provides an alternative mechanism to connect supply station 1 and robot unit 2, which enables the units to be connected and disconnected as necessary. According to some embodiments, coupling device 21 can include a rotatable hook connector 22 fixed on supply station 1 and a ring connector 23 fixed on robot unit 2. When robot unit 2 approaches supply station 1, hook connector 22 rotate and catch ring connector 23 so that supply station 1 and robot unit 2 are connected as one unit.

Such a design can be advantageous. For example, when supply station 1 and robot unit 2 are connected as one unit, supply station 1 can bring robot unit 2 to cross over a large trench. For another example, when some failure or error occur to robot unit 2, supply station 1 can engage robot unit 2 via coupling device 21 to keep robot unit 2 safe.

Alternatively, coupling device 21 can include a hook connector fixed on robot unit 2 and a ring connector fixed on supply station 1. Furthermore, coupling devices 21 can use other connection mechanism such as magnetic connectors.

The foregoing descriptions are merely preferred embodiments of the present invention, but are not intended to limit the present invention.

## Claims

1. A multifunctional robot system, comprising:
a movable supply station (1) comprising a power supply system (14);
a plurality of robot units (2); and
a traction device (6, 7) for driving the movable supply station,
wherein the movable supply station is connected with each of the plurality of robot units through a connecting cable (3), the connecting cable comprises a plurality of branch power cables, and the power supply system is configured to provide power for each robot unit respectively through the plurality of branch power cables;
wherein each of the plurality of robot units is provided with a robot driving device, an operation execution device, a robot adsorption device (4) and a robot moving device (13); and
wherein the robot driving device is configured to enable the each of the plurality of robot units to move on a working surface (5), the robot adsorption device is configured to adhere the each of the plurality of robot units to the working surface, the plurality of robot units are configured to move on a horizontal or vertical plane or over a bevel, and the movable supply station is configured to follow the plurality of robot units, **characterized by** further comprising:
a plurality of coupling devices (21) configured to flexibly connect the plurality of robot units to the movable supply station.

2. The multifunctional robot system of claim 1, wherein each of the plurality of coupling devices comprises a rotatable hook connector (22) fixed on the movable supply station and a ring connector (23) fixed on each of the plurality of robot units.

3. The multifunctional robot system of claim 1, wherein each of the plurality of coupling devices comprises a rotatable hook connector (22) fixed on each of the plurality of robot units and a ring connector (23) fixed on the movable supply station.

4. The multifunctional robot system of claim 1, wherein the movable supply station further comprises:
a movable supply station moving device (17) and a movable supply station adsorption device, wherein the movable supply station adsorption device is configured to adhere the movable supply station to the working surface, and the movable supply station moving device is configured to remain contact with the working surface so that the movable supply station moves on the working surface.

5. A multifunctional robot system, comprising:
a movable supply station (1) comprising a power supply system (14);
a plurality of robot units (2); and
a traction device (6, 7) for driving the movable supply station,
wherein the movable supply station is connected with each of the plurality of robot units through a connecting cable (3), the connecting cable comprises a plurality of branch power cables, and the power supply system is configured to provide power for each robot unit respectively through the plurality of branch power cables;
wherein each of the plurality of robot units is provided with a robot driving device, an operation execution device, a robot adsorption device (4) and a robot moving device (13); and
wherein the robot driving device is configured to enable the each of the plurality of robot units to move on a working surface (5), the robot adsorption device is configured to adhere the each of the plurality of robot units to the working surface, the plurality of robot units are configured to move on a horizontal or vertical plane or over a bevel, and the movable supply station is configured to follow the plurality of robot units, **characterized in that**:
the movable supply station further comprises a movable supply station moving device (17) and a movable supply station adsorption device, wherein the movable supply station adsorption device is configured to adhere the movable supply station to the working surface, and the movable supply station moving device is configured to remain contact with the working surface so that the movable supply station moves on the working surface; and:
at least one approach bridge plate (15) that is configured to be accommodated or unfolded.

6. The multifunctional robot system of claim 5, wherein the movable supply station further comprises:
a recycling cabin (16) that is configured to accommodate at least one robot unit, wherein the robot unit is configured to move into the recycling cabin from the working surface or move out from the recycling cabin to land on the working surface.

7. The multifunctional robot system of claim 5, wherein the movable supply station further comprises:
a recycling cabin (16) that is configured to accommodate at least one robot unit, wherein the robot unit is configured to move into the recycling cabin through the approach bridge plate from the working surface or move from the recycling cabin to land on the working surface.

8. The multifunctional robot system of claim 5, wherein each side of the recycling cabin comprises a limiting device that is configured to limit the positions of one robot unit.

## Patentansprüche

1. Multifunktionales Robotersystem, umfassend:
eine bewegliche Versorgungsstation (1), die ein Stromzufuhrsystem (14) umfasst;
eine Vielzahl von Robotereinheiten (2); und
eine Traktionsvorrichtung (6, 7) zum Antreiben der beweglichen Versorgungsstation,
wobei die bewegliche Versorgungsstation mit jeder der Vielzahl von Robotereinheiten durch ein Verbindungskabel (3) verbunden ist, wobei das Verbindungskabel eine Vielzahl von Abzweigstromkabeln umfasst und das Stromzufuhrsystem ausgelegt ist, um Strom für jede Robotereinheit jeweils durch die Vielzahl von Abzweigstromkabeln bereitzustellen;
wobei jede der Vielzahl von Robotereinheiten mit einer Roboterantriebsvorrichtung, einer Betriebsausführungsvorrichtung, einer Roboteradsorptionsvorrichtung (4) und einer Roboterbewegungsvorrichtung (13) versehen ist; und
wobei die Roboterantriebsvorrichtung ausgelegt ist, um jeder der Vielzahl von Robotereinheiten zu ermöglichen, sich auf einer Arbeitsoberfläche (5) zu bewegen, wobei die Roboteradsorptionsvorrichtung ausgelegt ist, um jede der Vielzahl von Robotereinheiten an der Arbeitsoberfläche zu halten, wobei die Vielzahl von Robotereinheiten ausgelegt ist, um sich auf einer horizontalen oder vertikalen Ebene oder über eine Gehrung zu bewegen, und die bewegliche Versorgungsstation ausgelegt ist, um der Vielzahl von Robotereinheiten zu folgen, **gekennzeichnet dadurch, dass** ferner umfasst ist:
eine Vielzahl von Kopplungsvorrichtungen (21), die ausgelegt sind, um die Vielzahl von Robotereinheiten flexibel mit der beweglichen Versorgungsstation zu verbinden.

2. Multifunktionales Robotersystem nach Anspruch 1, wobei jede der Vielzahl von Kopplungsvorrichtungen ein drehbares Hakenverbindungsstück (22), das an der beweglichen Versorgungsstation angebracht ist, und ein Ringverbindungsstück (23), das an jeder der Vielzahl von Robotereinheiten angebracht ist, umfasst.

3. Multifunktionales Robotersystem nach Anspruch 1, wobei jede der Vielzahl von Kopplungsvorrichtungen ein drehbares Hakenverbindungsstück (22), das an jeder der Vielzahl von Robotereinheiten angebracht ist, und ein Ringverbindungsstück (23), das an der beweglichen Versorgungsstation angebracht ist, umfasst.

4. Multifunktionales Robotersystem nach Anspruch 1, wobei die bewegliche Versorgungsstation ferner umfasst:
eine bewegliche Versorgungsstationsbewegungsvorrichtung (17) und eine bewegliche Versorgungsstationsadsorptionsvorrichtung, wobei die bewegliche Versorgungsstationsadsorptionsvorrichtung ausgelegt ist, um die bewegliche Versorgungsstation an der Arbeitsoberfläche zu halten, und die bewegliche Versorgungsstationsbewegungsvorrichtung ausgelegt ist, um in Kontakt mit der Arbeitsoberfläche zu bleiben, so dass sich die bewegliche Versorgungsstation auf der Arbeitsoberfläche bewegt.

5. Multifunktionales Robotersystem, umfassend:
eine bewegliche Versorgungsstation (1), die ein Stromzufuhrsystem (14) umfasst;
eine Vielzahl von Robotereinheiten (2); und
eine Traktionsvorrichtung (6, 7) zum Antreiben der beweglichen Versorgungsstation,
wobei die bewegliche Versorgungsstation mit jeder der Vielzahl von Robotereinheiten durch ein Verbindungskabel (3) verbunden ist, wobei das Verbindungskabel eine Vielzahl von Abzweigstromkabeln umfasst und das Stromzufuhrsystem ausgelegt ist, um Strom für jede Robotereinheit jeweils durch die Vielzahl von Abzweigstromkabeln bereitzustellen;
wobei jede der Vielzahl von Robotereinheiten mit einer Roboterantriebsvorrichtung, einer Betriebsausführungsvorrichtung, einer Roboteradsorptionsvorrichtung (4) und einer Roboterbewegungsvorrichtung (13) versehen ist; und
wobei die Roboterantriebsvorrichtung ausgelegt ist, um jeder der Vielzahl von Robotereinheiten zu ermöglichen, sich auf einer Arbeitsoberfläche (5) zu bewegen, wobei die Roboteradsorptionsvorrichtung ausgelegt ist, um jede der Vielzahl von Robotereinheiten an der Arbeitsoberfläche zu halten, wobei die Vielzahl von Robotereinheiten ausgelegt ist, um sich auf einer horizontalen oder vertikalen Ebene oder über eine Gehrung zu bewegen, und die bewegliche Versorgungsstation ausgelegt ist, um der Vielzahl von Robotereinheiten zu folgen, **dadurch gekennzeichnet, dass**:
die bewegliche Versorgungsstation ferner eine bewegliche Versorgungsstationsbewegungsvorrichtung (17) und eine bewegliche Versorgungsstationsadsorptionsvorrichtung umfasst, wobei die bewegliche Versorgungsstationsadsorptionsvorrichtung ausgelegt ist, um die bewegliche Versorgungsstation an der Arbeitsoberfläche zu halten, und die bewegliche Versorgungsstationsbewegungsvorrichtung ausgelegt ist, um in Kontakt mit der Arbeitsoberfläche zu bleiben, so dass sich die bewegliche Versorgungsstation auf der Arbeitsoberfläche bewegt; und
mindestens eine Zugangsbrückenplatte (15), die ausgelegt ist, um aufgenommen oder aufgeklappt zu werden.

6. Multifunktionales Robotersystem nach Anspruch 5, wobei die bewegliche Versorgungsstation ferner umfasst:
eine Wiederverwendungskammer (16), die ausgelegt ist, um mindestens eine Robotereinheit aufzunehmen, wobei die Robotereinheit ausgelegt ist, um sich von der Arbeitsoberfläche in die Wiederverwendungskammer zu bewegen oder um sich aus der Wiederverwendungskammer zu bewegen, um auf der Arbeitsoberfläche zu landen.

7. Multifunktionales Robotersystem nach Anspruch 5, wobei die bewegliche Versorgungsstation ferner umfasst:
eine Wiederverwendungskammer (16), die ausgelegt ist, um mindestens eine Robotereinheit aufzunehmen, wobei die Robotereinheit ausgelegt ist, um sich von der Arbeitsoberfläche mittels der Zugangsbrückenplatte in die Wiederverwendungskammer zu bewegen oder um sich aus der Wiederverwendungskammer zu bewegen, um auf der Arbeitsoberfläche zu landen.

8. Multifunktionales Robotersystem nach Anspruch 5, wobei jede Seite der Wiederverwendungskammer eine Begrenzungsvorrichtung umfasst, die ausgelegt ist, um die Positionen einer Robotereinheit zu begrenzen.

## Revendications

1. Système de robots multifonctionnel, comprenant :
une station d'alimentation mobile (1) comprenant un système d'alimentation électrique (14) ;
une pluralité d'unités de robot (2) ; et
un dispositif de traction (6, 7) destiné à entraîner la station d'alimentation mobile,
dans lequel la station d'alimentation mobile est connectée à chacune parmi la pluralité d'unités de robot par le biais d'un câble de connexion (3), le câble de connexion comprend une pluralité de câbles électriques auxiliaires, et le système d'alimentation électrique est configuré pour fournir de l'électricité à chaque unité de robot par le biais de la pluralité de câbles électriques auxiliaires ;
dans lequel chacune parmi la pluralité d'unités de robot est dotée d'un dispositif d'entraînement de robot, d'un dispositif d'exécution de tâche, d'un dispositif d'adsorption de robot (4) et d'un dispositif de déplacement de robot (13) ; et
dans lequel le dispositif d'entraînement de robot est configuré pour permettre à chacune parmi la pluralité d'unités de robot de se déplacer sur une surface de travail (5), le dispositif d'adsorption de robot est configuré pour faire adhérer chacune parmi la pluralité d'unités de robot à la surface de travail, la pluralité d'unités de robot sont configurées pour se déplacer sur un plan horizontal ou vertical ou sur un chanfrein, et la station d'alimentation mobile est configurée pour suivre la pluralité d'unités de robot, **caractérisé en ce qu'**il comprend en outre :
une pluralité de dispositifs d'accouplement (21) configurés pour connecter la pluralité d'unités de robot de manière flexible à la station d'alimentation mobile.

2. Système de robots multifonctionnel selon la revendication 1, dans lequel chacun parmi la pluralité de dispositifs d'accouplement comprend un connecteur en forme de crochet rotatif (22) fixé sur la station d'alimentation mobile et un connecteur en forme d'anneau (23) fixé sur chacune parmi la pluralité d'unités de robot.

3. Système de robots multifonctionnel selon la revendication 1, dans lequel chacun parmi la pluralité de dispositifs d'accouplement comprend un connecteur en forme de crochet rotatif (22) fixé sur chacune parmi la pluralité d'unités de robot et un connecteur en forme d'anneau (23) fixé sur la station d'alimentation mobile.

4. Système de robots multifonctionnel selon la revendication 1, dans lequel la station d'alimentation mobile comprend en outre :
un dispositif de déplacement de station d'alimentation mobile (17) et un dispositif d'adsorption de station d'alimentation mobile, le dispositif d'adsorption de station d'alimentation mobile étant configuré pour faire adhérer la station d'alimentation mobile à la surface de travail, et le dispositif de déplacement de station d'alimentation mobile étant configuré pour rester en contact avec la surface de travail de manière à ce que la station d'alimentation mobile se déplace sur la surface de travail.

5. Système de robots multifonctionnel, comprenant :
une station d'alimentation mobile (1) comprenant un système d'alimentation électrique (14) ;
une pluralité d'unités de robot (2) ; et
un dispositif de traction (6, 7) destiné à entraîner la station d'alimentation mobile,
dans lequel la station d'alimentation mobile est connectée à chacune parmi la pluralité d'unités de robot par le biais d'un câble de connexion (3), le câble de connexion comprend une pluralité de câbles électriques auxiliaires, et le système d'alimentation électrique est configuré pour fournir de l'électricité à chaque unité de robot par le biais de la pluralité de câbles électriques auxiliaires ;
dans lequel chacune parmi la pluralité d'unités de robot est dotée d'un dispositif d'entraînement de robot, d'un dispositif d'exécution de tâche, d'un dispositif d'adsorption de robot (4) et d'un dispositif de déplacement de robot (13) ; et
dans lequel le dispositif d'entraînement de robot est configuré pour permettre à chacune parmi la pluralité d'unités de robot de se déplacer sur une surface de travail (5), le dispositif d'adsorption de robot est configuré pour faire adhérer chacune parmi la pluralité d'unités de robot à la surface de travail, la pluralité d'unités de robot étant configurées pour se déplacer sur un plan horizontal ou vertical ou sur un chanfrein, et la station d'alimentation mobile est configurée pour suivre la pluralité d'unités de robot, **caractérisé en ce qu'**il comprend en outre :
la station d'alimentation mobile comprend en outre un dispositif de déplacement de station d'alimentation mobile (17) et un dispositif d'adsorption de station d'alimentation mobile, le dispositif d'adsorption de station d'alimentation mobile étant configuré pour faire adhérer la station d'alimentation mobile à la surface de travail, et le dispositif de déplacement de station d'alimentation mobile étant configuré pour rester en contact avec la surface de travail de manière à ce que la station d'alimentation mobile se déplace sur la surface de travail ; et
au moins une plaque de liaison d'approche (15) configurée pour être logée ou dépliée.

6. Système de robots multifonctionnel selon la revendication 5, dans lequel la station d'alimentation mobile comprend en outre :
une cabine de recyclage (16) configurée pour accueillir au moins une unité de robot, l'unité de robot étant configurée pour entrer dans la cabine de recyclage depuis la surface de travail ou pour sortir de la cabine de recyclage pour atterrir sur la surface de travail.

7. Système de robots multifonctionnel selon la revendication 5, dans lequel la station d'alimentation mobile comprend en outre :
une cabine de recyclage (16) configurée pour accueillir au moins une unité de robot, l'unité de robot étant configurée pour entrer dans la cabine de recyclage par le biais de la plaque de liaison d'approche depuis la surface de travail ou pour se déplacer à partir de la cabine de recyclage pour atterrir sur la surface de travail.

8. Système de robots multifonctionnel selon la revendication 5, dans lequel chaque côté de la cabine de recyclage comprend un dispositif de limitation configuré pour limiter les positions d'une unité de robot.
